# FASCICULE DE BREVET EUROPEEN

(11) **EP 1 288 108 B1**
(45) Date de publication et mention de la délivrance du brevet: **12.05.2010**
(21) Numéro de dépôt: 02356164.0
(22) Date de dépôt: 28.08.2002
(51) Int. Cl.: B62D 6/00

(54) **Procédé assurant la réversibilité de la direction d'un véhicule automobile**
Die Rückkehr einer Kraftfahrzeuglenkung sicherndes Verfahren
Process assuring the reversibility of a motor vehicle steering system

(30) Priorité: 04.09.2001 FR 0111445
(43) Date de publication de la demande: 05.03.2003
(73) Titulaire: JTEKT Europe, 69540 Irigny (FR)
(72) Inventeur: Reynard, Bruno, 69008 Lyon (FR)
(74) Mandataire: Bratel, Gérard

(56) Documents cités:
- EP-A- 1 029 772
- US-A- 4 909 343

## Description

La présente invention, relative au domaine automobile, concerne un procédé assurant la réversibilité de la direction d'un véhicule automobile. Plus particulièrement, cette invention s'intéresse à un procédé qui assure la réversibilité de la direction, dans le cas d'un véhicule automobile équipé d'une direction assistée électrique.

La réversibilité de la direction d'un véhicule est sa capacité à retourner d'elle-même vers le point milieu, c'est-à-dire vers la position de conduite du véhicule en ligne droite, depuis une position donnée correspondant à un certain angle de braquage, non nul. La réversibilité est fonction de la vitesse du véhicule, et de la géométrie du train avant de ce véhicule, et des caractéristiques élémentaires qui composent ce train avant (pneumatiques, amortisseurs, etc...).

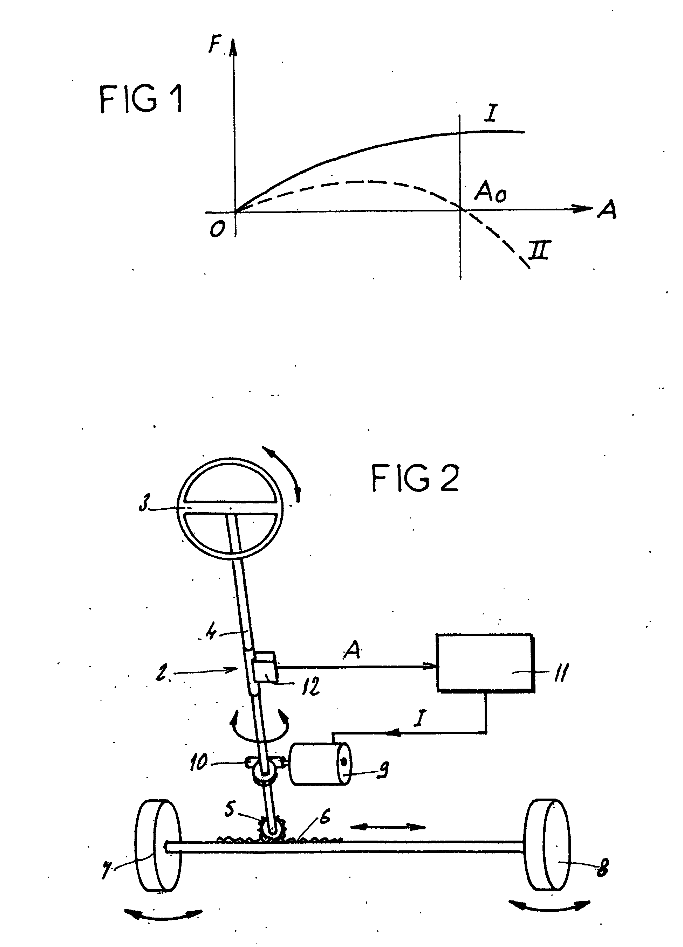

En particulier, la géométrie du train avant définit les lois mécaniques d'effort de rappel de la direction, en fonction de la vitesse du véhicule. La loi habituelle correspond à l'allure de la courbe I de la figure 1 du dessin annexé, sur laquelle l'angle du volant A est porté en abscisses, et l'effort de rappel Fest porté en ordonnées. Selon cette loi, l'effort de rappel F possède toujours une valeur positive, qui est même croissante avec l'angle du volant A. Ainsi, la direction du véhicule tend automatiquement à revenir vers le point milieu, quel que soit l'angle de braquage.

Par contre, certains véhicules possèdent une loi de rappel qui correspond à la courbe II de la figure 1, selon laquelle, pour certaines valeurs de l'angle du volant A, l'effort de rappel F devient négatif. En particulier, au-delà d'une certaine valeur Ao de l'angle du volant, l'effort de rappel peut devenir négatif, de sorte que le volant tend à se déplacer vers la butée de braquage, au lieu de se recentrer automatiquement. Ce phénomène peut, selon les cas, se manifester pour tout angle de volant A supérieur à la valeur Ao, ou pour seulement certaines valeurs supérieures à Ao de l'angle de volant A.

Ainsi, certains véhicules ont une tendance à braquer plus que ce qui est voulu pour leur conducteur, ce qui les rend dangereux du point de vue de leur sécurité de conduite. Pour éviter cet inconvénient, il convient de mettre en oeuvre des moyens propres à assurer, dans tous les cas et notamment quel que soit l'angle du volant, le rappel de la direction vers son point milieu.

Une solution consiste à redéfinir la géométrie du train avant du véhicule, notamment par un déport du point d'articulation des biellettes de direction.

Une autre solution, actuellement mise en oeuvre, est l'utilisation de ressorts à fil, intégrés à la direction, qui empêchent l'effort de rappel de devenir négatif, en assurant une compensation adaptée. Ces ressorts peuvent être placés en bout de crémaillère, et ils viennent alors s'appuyer sur le carter de direction, en fin de braquage.

Toutes ces solutions disponibles nécessitent une modification mécanique de la direction, ou le montage de pièces complémentaires, et elles engendrent des coûts de conception et de réalisation.

Le document US-A-4909343 décrit une direction assistée hydraulique ou électrique de véhicule automobile, complétée par un dispositif de rappel électrique, commandant le retour en position neutre au moyen d'un moteur électrique additionnel. Ce moteur électrique de rappel est lui-même commandé à partir d'un capteur d'angle de la colonne de direction et en tenant compte aussi éventuellement de la vitesse du véhicule.

Le document EP-A-1029772 décrit la commande d'une direction assistée selon le préambule des revendications 1 et 6, pouvant comporter un moteur électrique d'assistance, ce document mentionnant une stratégie de rappel exécutée par un calculateur, et consistant à commander le moteur de manière que celui-ci applique au mécanisme de direction un couple de rappel fonction de l'angle du volant et de la vitesse du véhicule, propre à ramener le volant en position neutre lorsque ce dernier est lâché par le conducteur. Le document différencie la stratégie de rappel, selon que le véhicule circule en marche avant ou en marche arrière, mais il ne pose pas le problème de la réversibilité de la direction, selon que l'effort de rappel « naturel » est positif ou négatif.

La présente invention vise à fournir une solution plus simple et plus économique, et aussi plus universelle, adaptable à des véhicules équipés d'une direction assistée électrique qui, actuellement, devient de plus en plus courante.

A cet effet, l'invention a essentiellement pour objet un procédé assurant la réversibilité de la direction d'un véhicule automobile, pour un véhicule automobile équipé d'une direction assistée électrique, le procédé étant
caractérisé selon les revendications 1 et 6.

Ainsi, l'idée inventive consiste à mettre à profit la direction assistée électrique, par envoi d'un courant électrique approprié dans son moteur, pour compenser l'effort de rappel négatif résultant de la géométrie du train avant du véhicule concerné. L'effet de ce courant est donc opposé à l'effort "naturel", de sens indésirable, qui résulte du train avant. De plus, le courant injecté selon l'invention dans le moteur électrique de la direction assistée est "dosé" de telle sorte que l'effort de rappel résultant devienne toujours positif, quelle que soit la valeur de l'angle du volant. Ainsi, on peut obtenir (par référence à la figure 1) une courbe d'effort de rappel résultant ayant la même allure que la courbe I, caractéristique d'un véhicule avec effort de rappel "naturellement" positif. Le rappel de la direction du véhicule vers le point milieu est donc assuré, pour toutes les positions angulaires du volant, et ceci de façon automatique.

L'invention propose donc une solution simple, ne nécessitant ni la modification, ni l'adjonction de composants mécaniques, et pouvant être mise en oeuvre par une simple adaptation de la logique de commande de la direction en oeuvre par une simple adaptation de la logique de commande de la direction assistée électrique (sachant qu'un capteur de l'angle du volant, ou autre grandeur équivalente, est de toute façon présent sur ce genre de direction). Ainsi, la solution proposée est excessivement économique.

Le courant électrique "de rappel", injecté selon l'invention dans le moteur électrique de la direction assistée électrique pour rendre positif l'effort de rappel, peut être rendu variable, notamment être modulé, ou être pondéré, ou encore être limité, en fonction de paramètres divers, tels que la vitesse du véhicule, la vitesse de rotation du volant, le couple appliqué au volant, etc... Ce courant électrique de rappel, injecté dans le moteur de la direction assistée, peut aussi être aisément adapté à diverses variantes d'un type donné de véhicule, par exemple pour tenir compte des caractéristiques variables des jantes et des pneumatiques, lesquelles peuvent entraîner une modification de l'angle de volant Ao au-delà duquel l'effort de rappel "naturel" devient négatif.

Si l'effort de rappel "naturel" redevient positif au-delà d'une deuxième valeur d'angle du volant A1, supérieure à la valeur Ao précédemment considérée, le courant électrique de rappel injecté dans le moteur de la direction assistée pourra aussi être modulé en conséquence, en se trouvant fortement réduit, voire annulé, au-delà de cette deuxième valeur d'angle A1.

Ainsi, la solution proposée par la présente invention possède une grande souplesse d'adaptation, et son adaptation peut être effectuée de façon aisée et précise, par de simples opérations de programmation effectuées sur un calculateur qui, de façon connue en soi, pilote la direction assistée électrique.

Enfin, si pour la clarté de l'explication on a ici "isolé" la fonction de rappel de la direction vers son point milieu, et les moyens mis en oeuvre pour obtenir ce rappel, il convient de noter que, dans la pratique, la commande générale du moteur électrique d'assistance peut avantageusement combiner l'action de rappel et d'autre lois, tenant compte de divers paramètres décrivant l'état de fonctionnement du véhicule ou les actions du conducteur, ce qui conduit par exemple, dans certaines conditions, à limiter le courant injecté dans le moteur électrique pour les besoins du rappel de la direction assistée.

L'invention sera mieux comprise à l'aide de la description qui suit, en référence au dessin schématique annexé représentant, à titre d'exemple, une direction assistée électrique permettant la mise en oeuvre de l'invention, et illustrant le procédé de l'invention :
Figure 1 (déjà mentionnée) est un diagramme illustrant des lois connues d'effort de rappel d'une direction de véhicule automobile ;
Figure 2 représente, très schématiquement, une direction assistée électrique de véhicule automobile ;
Figure 3 est un autre diagramme, illustrant un exemple de loi de variation du courant électrique de rappel pouvant être injecté, selon l'invention, dans le moteur électrique d'une telle direction assistée.

La figure 2 montre les éléments habituels d'une direction 2 de véhicule automobile, en particulier un volant de conduite 3 lié à une colonne de direction 4, dont l'extrémité éloignée du volant 3 porte un pignon 5 qui vient en prise avec une crémaillère 6 ; les deux extrémités opposés de la crémaillère 6 sont respectivement liées, par l'intermédiaire de biellettes (ici non représentées), aux deux roues directrices 7 et 8 du train avant du véhicule.

S'agissant ici d'une direction assistée électrique, celle-ci comprend un moteur électrique d'assistance 9, à deux sens de rotation, dont l'arbre de sortie est, dans l'exemple illustré, accouplé par l'intermédiaire d'une transmission mécanique 10 à la colonne de direction 4, de manière à lui transmettre un couple. Dans des variantes non illustrées, l'arbre de sortie du moteur électrique d'assistance 9 peut aussi être accouplé au pignon 5, ou directement à la crémaillère 6.

Le moteur électrique d'assistance 9 est piloté par un calculateur électronique 11. Ce dernier reçoit, entre autres, un signal électrique issu d'un capteur 12 de l'angle de volant A, ou de toute autre grandeur équivalente, significative de l'angle instantané de braquage du véhicule automobile concerné.

Il est ici supposé qu'il s'agit d'un véhicule pour lequel l'effort de rappel "naturel" de la direction n'est pas positif pour toutes les valeurs de l'angle de volant A, en particulier un véhicule pour lequel cet effort de rappel devient négatif au-delà d'une certaine valeur Ao de l'angle de volant A, de sorte que la réversibilité de la direction 2 n'est pas assurée par la seule géométrie du train avant.

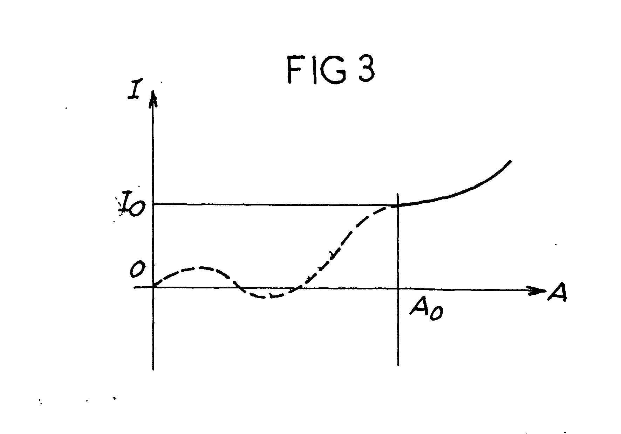

Pour rétablir la réversibilité de la direction 2, en particulier lorsque l'angle du volant A est supérieur à la valeur Ao, et comme l'illustre le diagramme de la figure 3, un courant électrique d'intensité I est injecté dans le moteur électrique d'assistance 9, au moins pour les valeurs d'angle de volant A supérieures à Ao, de manière à rendre l'effort de rappel toujours positif, c'est-à-dire que la direction tend à revenir vers le point milieu, pour toutes les positions du volant 3. Plus particulièrement, pour les angles de volant A supérieurs à la valeur Ao, la loi de variation de l'intensité I du courant de rappel injecté peut être constante, ou être croissante par exemple de façon linéaire ou selon toute autre loi de variation, à partir d'une valeur Io de cette intensité (pour la valeur d'angle Ao). Pour les valeurs de l'angle de volant A inférieures à Ao, et comme suggéré en pointillés, le courant injecté I peut suivre une loi de variation quelconque, ou simplement posséder une valeur nulle, ou déjà positive.

L'injection de ce courant de rappel d'intensité I, dans le moteur électrique d'assistance 9, est contrôlée par le calculateur électronique 11, à partir de divers paramètres et, notamment, en tenant compte du signal issu du capteur 12 et représentatif de l'angle de volant A. La programmation du calculateur 11 permet d'adapter la loi de variation de l'intensité I du courant injecté, pour chaque cas particulier d'application.

L'on ne s'éloignerait pas du cadre de l'invention, telle que définie dans les revendications annexées, en modifiant ou en choisissant différemment :
- le moyen de mesure de l'angle de volant, ou autre grandeur significative équivalente,
- la loi de variation de l'intensité du courant de rappel injecté, en fonction de l'angle de volant, cette loi pouvant être simplement l'imposition d'une intensité constante, pour les angles de volant supérieurs à la valeur Ao, ou une loi plus complexe,
- les modulations, pondérations ou limitations apportées à ce courant injecté, en fonction de divers autres paramètres,
- les moyens techniques de mise en oeuvre du procédé.

## Revendications

1. Procédé assurant la réversibilité de la direction d'un véhicule automobile, pour un véhicule automobile équipé d'une direction assistée électrique (2), tel que, au moins pour tout angle (A) du volant de direction (3), pour lequel l'effort de rappel (F) "naturel" de la direction, résultant de la géométrie du train avant (7, 8) du véhicule, est négatif, le moteur électrique (9) de la direction assistée électrique est alimenté par un courant électrique (I) provoquant la rotation de ce moteur électrique (9) dans le sens correspondant au retour de la direction (2) vers son point milieu,
**caractérisé en ce que,** dans le cas d'un véhicule pour lequel l'effort de rappel (F) "naturel" de la direction (2) devient négatif au-delà d'une valeur (Ao) de l'angle de volant (A) nettement distincte de celle du point milieu, le courant électrique (I) de rappel est injecté dans le moteur électrique d'assistance (9) au moins pour les valeurs d'angle de volant (A) supérieures à la valeur (Ao).

2. Procédé selon la revendication 1, **caractérisé en ce que** le courant électrique (I) de rappel, injecté dans le moteur électrique d'assistance (9), est modulé ou pondéré ou limité en fonction de paramètres autres que l'angle de volant (A).

3. Procédé selon la revendication 1 ou 2, **caractérisé en ce que**, pour les angles de volant (A) supérieurs à la valeur (Ao), l'intensité (I) du courant de rappel injecté dans le moteur électrique d'assistance (9) est constante.

4. Procédé selon la revendication 1 ou 2, **caractérisé en ce que**, pour les angles de volant (A) supérieurs à la valeur (Ao), la loi de variation de l'intensité (I) du courant de rappel injecté dans le moteur électrique d'assistance (9) est croissante, par exemple de façon linéaire.

5. Procédé selon l'une quelconque des revendications 1 à 4, **caractérisé en ce que** l'injection du courant électrique (I) de rappel, dans le moteur électrique d'assistance (9), est contrôlée, et rendue adaptable, par un calculateur électronique (11) pilotant ledit moteur électrique d'assistance (9), ce calculateur (11) recevant, entre autres, un signal électrique issu d'un capteur (12) de l'angle de volant (A), ou de toute autre grandeur équivalente.

6. Procédé assurant la réversibilité de la direction d'un véhicule automobile, pour un véhicule automobile équipé d'une direction assistée électrique (2), tel que, au moins pour tout angle (A) du volant de direction (3), pour lequel l'effort de rappel (F) "naturel" de la direction, résultant de la géométrie du train avant (7, 8) du véhicule, est négatif, le moteur électrique (9) de la direction assistée électrique est alimenté par un courant électrique (I) provoquant la rotation de ce moteur électrique (9) dans le sens correspondant au retour de la direction (2) vers son point milieu,
**caractérisé en ce que,** dans le cas d'un véhicule pour lequel l'effort de rappel (F) "naturel" de la direction (2) devient négatif au-delà d'une valeur (Ao) de l'angle de volant (A), et redevient positif au-delà d'une deuxième valeur d'angle de volant (A1) supérieure à la valeur (Ao) précédemment considérée, le courant électrique (I) de rappel est injecté dans le moteur électrique d'assistance (9) au-delà de la valeur d'angle (Ao), et ce courant de rappel se trouve fortement réduit, voire annulé, au-delà de la deuxième valeur d'angle (A1)

## Claims

1. Method for ensuring the reversibility of the steering of a motor vehicle, for a motor vehicle fitted with an electric assisted steering (2) so that, at least for any angle (A) of the steering wheel (3), for which the "natural" return force (F) of the steering, resulting from the geometry of the front running gear (7, 8) of the vehicle, is negative, the electric motor (9) of the electric assisted steering is supplied by an electric current (I) causing this electric motor (9) to rotate in the direction corresponding to the return of the steering (2) to its mid-point,
**characterized in that**, in the case of a vehicle for which the "natural" return force (F) of the steering (2) becomes negative beyond a value (Ao) of the steering-wheel angle (A) that is clearly distinct from that of the mid-point, the return electric current (I) is injected into the assistance electric motor (9) at least for the steering-wheel angle (A) values greater than the value (Ao).

2. Method according to Claim 1, **characterized in that** the return electric current (I) injected into the assistance electric motor (9) is modulated or weighted or limited according to parameters other than the steering-wheel angle (A).

3. Method according to Claim 1 or 2, **characterized in that**, for the steering-wheel angles (A) greater than the value (Ao), the intensity (I) of the return current injected into the assistance electric motor (9) is constant.

4. Method according to Claim 1 or 2, **characterized in that**, for the steering-wheel angles (A) greater than the value (Ao), the law of variation of intensity (I) of the return current injected into the assistance electric motor (9) is increasing, for example in a linear manner.

5. Method according to any one of Claims 1 to 4, **characterized in that** the injection of the electric return current (I) into the assistance electric motor (9) is controlled and made adaptable, by an electronic computer (11) driving the said assistance electric motor (9), this computer (11) receiving, amongst others, an electric signal originating from a sensor (12) of the steering-wheel angle (A), or of any other equivalent magnitude.

6. Method ensuring the reversibility of the steering of a motor vehicle, for a motor vehicle fitted with an electric assisted steering (2) so that, at least for any angle (A) of the steering wheel (3), for which the "natural" return force (F) of the steering, resulting from the geometry of the front running gear (7, 8) of the vehicle, is negative, the electric motor (9) of the electric assisted steering is supplied by an electric current (I) causing this electric motor (9) to rotate in the direction corresponding to the return of the steering (2) to its mid-point,
**characterized in that**, in the case of a vehicle for which the "natural" return force (F) of the steering (2) becomes negative beyond a value (Ao) of the steering-wheel angle (A), and becomes positive again beyond a second steering-wheel angle value (A1) greater than the value (Ao) previously considered, the return electric current (I) is injected into the assistance electric motor (9) beyond the angle value (Ao), and this return current is greatly reduced, or even nullified, beyond the second angle value (A1).

## Patentansprüche

1. Verfahren, das die Umkehrbarkeit der Lenkung eines Kraftfahrzeugs gewährleistet, für ein mit einer elektrischen Servolenkung (2) ausgestattetes Kraftfahrzeug, derart, dass mindestens für jeden Winkel (A) des Lenkrads (3), bei dem die "natürliche" Rückstellkraft (F) der Lenkung, die aus der Geometrie der Vorderachse (7, 8) des Fahrzeugs resultiert, negativ ist, der Elektromotor (9) der elektrischen Servolenkung mit einem elektrischen Strom (I) gespeist wird, der die Drehung dieses Elektromotors (9) in die Richtung entsprechend der Rückkehr der Lenkung (2) zu ihrem Mittelpunkt bewirkt,
**dadurch gekennzeichnet, dass** im Fall eines Fahrzeugs, bei dem die "natürliche" Rückstellkraft (F) der Lenkung (2) jenseits eines Werts (Ao) des Lenkradwinkels (A), der sich deutlich von demjenigen des Mittelpunkts unterscheidet, negativ wird, der elektrische Rückstellstrom (I) in den elektrischen Unterstützungsmotor (9) zumindest für die Lenkradwinkelwerte (A) höher als der Wert (Ao) eingespeist wird.

2. Verfahren nach Anspruch 1, **dadurch gekennzeichnet, dass** der elektrische Rückstellstrom (I), der in den elektrischen Unterstützungsmotor (9) eingespeist wird, in Abhängigkeit von anderen Parametern als dem Lenkradwinkel (A) moduliert, gewichtet oder begrenzt wird.

3. Verfahren nach Anspruch 1 oder 2, **dadurch gekennzeichnet, dass** für die Lenkradwinkel (A) größer als der Wert (Ao) die Stärke (I) des in den elektrischen Unterstützungsmotor (9) eingespeisten Rückstellstroms konstant ist.

4. Verfahren nach Anspruch 1 oder 2, **dadurch gekennzeichnet, dass** für die Lenkradwinkel (A) größer als der Wert (Ao) das Veränderungsgesetz der Stärke (I) des in den elektrischen Unterstützungsmotor (9) eingespeisten Rückstellstroms ansteigend ist, zum Beispiel linear.

5. Verfahren nach einem der Ansprüche 1 bis 4, **dadurch gekennzeichnet, dass** die Einspeisung des elektrischen Rückstellstroms (I) in den elektrischen Unterstützungsmotor (9) von einem elektronischen Rechner (11) gesteuert und anpassbar gemacht wird, der den elektrischen Unterstützungsmotor (9) steuert, wobei dieser Rechner (11) unter anderen ein elektrisches Signal empfängt, das von einem Sensor (12) des Lenkradwinkels (A) oder jeder anderen äquivalenten Größe stammt.

6. Verfahren, das die Umkehrbarkeit der Lenkung eines Kraftfahrzeugs gewährleistet, für ein mit einer elektrischen Servolenkung (2) ausgestattetes Kraftfahrzeug, derart, dass mindestens für jeden Winkel (A) des Lenkrads (3), bei dem die "natürliche" Rückstellkraft (F) der Lenkung, die aus der Geometrie der Vorderachse (7, 8) des Fahrzeugs resultiert, negativ ist, der Elektromotor (9) der elektrischen Servolenkung mit einem elektrischen Strom (I) gespeist wird, der die Drehung dieses Elektromotors (9) in die Richtung entsprechend der Rückkehr der Lenkung (2) zu ihrem Mittelpunkt bewirkt,
**dadurch gekennzeichnet, dass** im Fall eines Fahrzeugs, bei dem die "natürliche" Rückstellkraft (F) der Lenkung (2) jenseits eines Werts (Ao) des Lenkradwinkels (A) negativ wird, und jenseits eines zweiten Lenkradwinkelwerts (A1) größer als der vorher betrachtete Wert (Ao) wieder positiv wird, der elektrische Rückstellstrom (I) in den elektrischen Unterstützungsmotor (9) jenseits des Winkelwerts (Ao) eingespeist wird, und dieser Rückstellstrom jenseits des zweiten Winkelwerts (A1) stark verringert oder sogar zu Null wird.
